# EUROPÄISCHE PATENTSCHRIFT

(11) **EP 4 382 679 B1**
(45) Veröffentlichungstag und Bekanntmachung des Hinweises auf die Patenterteilung: **18.11.2026**
(21) Anmeldenummer: 23212875.1
(22) Anmeldetag: 29.11.2023
(51) Int. Cl.: E02F 9/20, B60K 28/04, E02F 9/26

(54) **MOBILE BAUMASCHINE MIT EINEM STEUERSTAND**
MOBILE CONSTRUCTION MACHINE WITH A CONTROL STAND
ENGIN DE CHANTIER MOBILE COMPRENANT UN POSTE DE COMMANDE

(30) Priorität: 05.12.2022 DE 102022132249
(43) Veröffentlichungstag der Anmeldung: 12.06.2024
(73) Patentinhaber: Weidemann GmbH, 34497 Korbach (DE)
(72) Erfinder: Schüttler, Torben, 34497 Korbach (DE); Fettke, Thorsten, 34477 Twistetal (DE); Schweinsberg, Thomas, 59964 Medebach-Medelon (DE); Tilly, Thomas, 48231 Warendorf (DE)
(74) Vertreter: RavensPAT Patentanwälte Partnerschaft mbB

(56) Entgegenhaltungen:
- DE-A1- 102018 210 354
- US-A1- 2021 094 417
- US-A1- 2021 301 494

## Beschreibung

Die Erfindung betrifft eine mobile Baumaschine, insbesondere Radlader, Teleskoplader, Bagger, Dumper oder dergleichen, mit einer Antriebseinheit zum Antreiben wenigstens eines Antriebslaufrades oder einer Antriebskette und mit einer elektrische und/oder elektronische Kontrolleinheit sowie mit einem Steuerstand und/oder einer Fahrerkabine.

### Stand der Technik

Mobile Baumaschine, insbesondere Radlader, Teleskoplader, Bagger, Dumper oder dergleichen, mit einem Fahrzeugrahmen und mit einer Antriebseinheit zum Antreiben wenigstens eines Antriebselementes wie eines Laufrades oder Laufkette, werden heutzutage meist mit einem nachfüllbaren Kraftstoff betrieben. Dabei kommen heute hauptsächlich dieselgetriebene Fahrzeuge zum Einsatz. Zwischenzeitlich sind bereits auch elektrisch angetriebene Maschinen im Einsatz.

Außer bei z.B. Radladern mit großen Schaufeln am Hubarm weisen moderne, mobile Baumaschinen vielfach lösbar verbindbare Arbeitswerkzeuge auf, z.B. die mittels sog. "Schnellwechslern" bzw. "Wechselplatten" gehalten bzw. gelöst werden. Hierbei existieren neben "passiven" Arbeitswerkzeugen wie Schaufel, Ballen-Gabel oder dergleichen auch Arbeitswerkzeuge wie ein Kehrbesen, Mulcher, Greifarme, Greifschaufel, Hebegabeln oder dergleichen, die entsprechend ein "aktives" bzw. mit Energie antreibbares Werkzeug aufweisen.

Darüber hinaus sind auch Baumaschinen als Muldenkipper gebräuchlich, die als Arbeitswerkzeug eine kippbare Mulde aufweisen. Die kippbare Mulde kann entweder als Absetzmulde, die mittels schwenkbaren/kippbaren Hebelarmen des Baufahrzeugs aufgenommen oder z.B. auf den Boden abgesetzt werden kann, oder als Auflieger, der üblicherweise mittels Hydraulikzylinder zum Entladen angehoben bzw. gekippt werden kann, ausgebildet werden.

Es soll zukünftig autonome Baumaschinen geben, die gewisse Funktionen autonom ausführen, also ohne Steuerung und Überwachung durch einen Bediener. Diese Maschinen benötigen Sensoren, um deren Umfeld zu überwachen und eine sichere Funktion zu ermöglichen.

Derzeit werden die Baumaschinen jedoch noch durch einen Bediener bzw. Fahrer gesteuert, der auf der Maschine sitzt, z.B. bei einem Bagger, Radlader usw. auf einem ggf. teilweise "offenen" Steuerstand und/oder einer "geschlossenen" bzw. verschließbaren Fahrerkabine. Es gibt bereits diverse Hilfs- und Assistenzfunktionen, die die Arbeit erleichtern. Allerdings ist jedoch ein Bediener notwendig, der die Funktionen zumindest aktiviert und überwacht.

Aus der US 2021/0301 494 A1 sind Baumaschinen bekannt geworden, wobei die Anwesenheit eines Bedieners auf dem Steuerstand mittels eines Sensors erfassbar ist.

Zudem ist aus der DE 10 2018 210 354 A1 die Freigabe eines autonomen Fahrmodus eines Kraftfahrzeugs bekannt.

### Aufgabe und Vorteile der Erfindung

Aufgabe der Erfindung ist es demgegenüber, eine mobile Baumaschine vorzuschlagen, wobei wenigstens teilweise die Nachteile des Standes der Technik verbessert bzw. vermieden werden, insbesondere sollen v.a. wiederkehrende Arbeiten durch die Baumaschine autonom abgearbeitet werden können und/oder es soll ermöglicht werden, dass die Baumaschine auch solche Arbeiten verrichten kann, ohne dass die Steuerung durch einen Bediener erfolgt, und/oder es soll aber auch möglich bleiben, dass die Baumaschine wie herkömmlich durch einen Bediener gesteuert werden kann, wozu ein "üblicher" Steuerstand bzw. eine Fahrerkabine auf/an der Baumaschine vorzusehen ist.

Diese Aufgabe wird, ausgehend von einer mobilen Baumaschine der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Baumaschine v.a. dadurch aus, dass die elektrische und/oder elektronische Kontrolleinheit wenigstens eine Autonomiesteuereinheit zum autonomen Fahren und/oder Steuern der Baumaschine in einem Autonomiemodus aufweist, wobei ein Bediener-Anwesenheitssensor zum Erfassen der Anwesenheit und/oder Nicht-Anwesenheit eines Menschen oder des Bedieners/Fahrers auf dem Steuerstand und/oder in der Fahrerkabine vorgesehen ist, und dass wenigstens eine externe Steuervorrichtung, wie ein Computer, Telekommunikationsgerät, Smartphone, Tablet, Smartwatch oder dergleichen, zum Festlegen wenigstens eines Zeitpunktes/Zeitraumes für den Autonomiemodus ausgebildet ist und dass wenigstens eine Kommunikationseinheit zum Übermitteln und/oder drahtlosen Senden/Empfangen von Daten/Informationen zwischen der Steuervorrichtung und der Kontrolleinheit vorgesehen ist, so dass die Kontrolleinheit zumindest zu dem Zeitpunkt/Zeitraum den Autonomiemodus aktiviert.

So kann ein autonomer Betreib bzw. ein Autonomiemodus und zudem auch ein Fahrermodus umgesetzt werden. Dies hat den Vorteil, dass die Baumaschine einerseits manuell von einem Fahrer/Bediener und andererseits autonom betrieben werden kann. Beispielsweise können sog. "Standartaufgaben" bzw. sich wiederholende Aufgaben/Tätigkeiten im Autonomiemodus bzw. autonom ohne Fahrer erledigt bzw. durchgeführt werden, z.B. ein sog. Hoflader räumt die sog. "Futtergasse" jeden Tag auf oder räumt den Mist im Stahl weg. Komplexe und/oder einmalige/seltene Tätigkeit wie eine Baugrube für ein neues/weiteres Gebäude können in einem Fahrermodus manuell bzw. mit einem Fahrer durchgeführt bzw. realisiert werden. Dies verbessert die Flexibilität der Baumaschine in erheblichem Maß.

Gerade durch den Bediener-Anwesenheitssensor wird eine Verbesserung der Betriebssicherheit erreicht. Nämlich z.B. dadurch, dass mit Hilfe des Bediener-Anwesenheitssensors bzw. dessen elektrischem Sensorsignal die elektrische und/oder elektronische Kontrolleinheit in vorteilhafter Weise zumindest zwischen dem Autonomiemodus und dem Fahrermodus wechseln bzw. umschalten kann.

Gemäß Erfindung wird eine weitergehende Automatisierung realisierbar, insb. wird eine automatisierte und geplante bzw. planbare Betriebsweise der Baumaschine im Autonomiemodus umsetzbar.

Vorstellbar ist, dass die externe Steuervorrichtung den Tages-, Wochen-, Monats- oder Jahresplan bereitstellt und an die Autonomiesteuereinheit sendet oder die Autonomiesteuereinheit den Plan von der Steuervorrichtung abruft. Denkbar ist, dass der Tages-, Wochen-, Monats- oder Jahresplan abhängig ist von anwesenden oder abwesenden Mitarbeitern, von dem aktuellen Standort der Maschine und/oder abhängig von Belegungen einer Box, eines Reitplatzes und/oder eines Stellplatzes.

Beispielsweis ist die externe Steuervorrichtung derart ausgebildet, dass wenigstens ein Tages- und/oder Wochenplan mit einem oder mehreren Zeitpunkte/Zeiträume für den Autonomiemodus der Baumaschine vorgesehen/festlegbar ist. So können z.B. sich im Tages- und/oder Wochenlauf und/oder Jahreslauf sich immer wieder wiederholende und ggf. standardisierte Arbeiten autonom mit der Baumaschine gemäß der Erfindung abgearbeitet bzw. ausgeführt werden. Hierbei kann der Bediener die Eingabe bzw. Planung und/oder Programmierung/Konfigurierung der Baumaschine zu einem beliebigen Zeitpunkt und/oder beliebigen Ort vornehmen und in vorteilhafter Weise drahtlos an die Baumaschine bzw. deren Empfangseinheit übermitteln.

Beispielsweise weist die Kontrolleinheit oder die Autonomiesteuereinheit einen Speicher auf, in welchem ein Tagesplan, ein Wochenplan, ein Monatsplan oder ein Jahresplan ablegbar ist. Zum Beispiel ist die Autonomiesteuereinheit dazu ausgebildet, den Speicher auszulesen. Beispielsweise ist die Autonomiesteuereinheit dazu ausgebildet, abhängig von im Tagesplan oder im Wochenplan abgespeicherten Steuer- oder Regelbefehlen die Baumaschine im autonomen Betrieb bzw. im Autonomiemodus zu steuern und/oder zu regeln.

Denkbar ist, dass die Steuer- und Regelbefehle im Tages- oder Wochenplan abhängig von Events sind. Ein Event kann im Tagesplan, ein Wochenplan, ein Monatsplan oder ein Jahresplan fest enthalten sein, oder aufgrund eines Ereignisses, z.B. aufgrund eines Sensorsignals erzeugt werden. Ein Event ist beispielsweise eine Änderung der Umgebungstemperatur unter oder über einen Temperaturschwellwert. Ein Event ist beispielsweise auch durch ein Sensorsignal eines internen Sensors aktivierbar. Z.B. wenn das Sensorsignal einen Schwellwert über- oder unterschreitet. Denkbar ist auch, dass ein Event durch einen externen Sensor aktivierbar ist. Beispielsweise weist die Baumaschine zum Empfangen und Verarbeiten des Signals eine Empfangseinheit auf.

Beispielsweise sendet ein Futtermischwagen an die Baumaschine ein Signal wann gefüttert wurde und aktiviert dadurch ein Event. Beispielweise steuert oder regelt die Autonomiesteuereinheit zeitlich abhängig von diesem Event die Baumaschine, sodas die Baumaschine eine definierte Zeitspanne nach dem Event das Futter nachschiebt.

Vorteilhafterweise ist die elektrische und/oder elektronische Kontrolleinheit derart ausgebildet, dass in einem ersten Fall bei Anwesenheit eines Menschen oder des Bedieners/Fahrers auf dem Steuerstand und/oder in der Fahrerkabine zumindest die Autonomiesteuereinheit deaktiviert ist, so dass die Baumaschine in dem Fahrermodus und/oder nicht im Autonomiemodus betreibbar ist, und dass in einem zweiten Fall bei Nicht-Anwesenheit eines Menschen oder des Bedieners/Fahrers auf dem Steuerstand und/oder in der Fahrerkabine die Autonomiesteuereinheit aktivierbar ist, so dass die Baumaschine in dem Autonomiemodus und/oder nicht im Fahrermodus betreibbar ist. So kann die elektrische und/oder elektronische Kontrolleinheit lediglich den Autonomiemodus "freischalten" bzw. freigeben, wenn der Bediener/Fahrer nicht im sog. Führer- bzw. Steuerstand bzw. nicht in der Fahrerkabine anwesend ist. Gegebenenfalls kann eine derartige "Freischaltung" des Autonomiemodus erst dann erfolgen, wenn der Fahrer/Bediener sich ein wenig von der Baumaschine weg bewegt hat, d.h. wenn der Fahrer/Bediener einen vorgegebenen Mindestabstand zur Baumaschine aufweist/einhält. Letzteres kann in vorteilhafter Weise mittels einer Abstands- und/oder Umgebungserfassungseinheit zum Erfassen der Umgebung und/oder eines Mindestabstandes zu der Baumaschine realisiert werden.

Beispielsweise ist die elektrische und/oder elektronische Kontrolleinheit derart ausgebildet, dass im Autonomiemodus wenigstens das Lenkelement/Lenkrad der Lenkvorrichtung und das Bedienelement deaktiviert ist/sind. Hiermit wird die Betriebssicherheit weiter verbessert. Durch die "Sperrung" bzw. Deaktivierung des Lenkelementes/Lenkrades der Lenkvorrichtung kann der Fahrer die Baumaschine nicht mehr lenken, so dass ein Fahren/Arbeiten nicht mehr möglich ist.

In einer besonderen Weiterbildung der Erfindung ist die elektrische und/oder elektronische Kontrolleinheit derart ausgebildet, dass im Autonomiemodus wenigstens ein oder mehrere Nebenaggregate und/oder Komfortgeräte wie Radio, Heizung, Klimaanlage, Armaturen-/Kabinenbeleuchtung oder dergleichen deaktiviert ist/sind. So kann Energie bzw. Strom eingespart werden, was die Energieeffizienz verbessert und eine besonders kostengünstige Betriebsweise ermöglicht.

Vorteilhafterweise ist der Bediener-Anwesenheitssensor als Sitzkontakt-Sensor zum Erfassen des Fahrers auf dem Fahrersitz und/oder als Aktivierungs-/Zündschloss-/Starter-Sensor zum manuellen Starten/Aktivieren eines Starterelementes der Baumaschine ausgebildet. So kann der Fahrermodus in vorteilhafter Weise aktiviert bzw. in diesen gewechselt/geschalten werden, insb. mittels der elektrischen und/oder elektronischen Kontrolleinheit, wenn der Fahrer/Bediener auf seinem Sitz Platz nimmt und/oder die Baumaschine manuell startet/starten möchte. Gleichzeitig sperrt bzw. deaktiviert die elektrische und/oder elektronische Kontrolleinheit in vorteilhafter Weise den Autonomiemodus.

In vorteilhaften Varianten der Erfindung ist der Bediener-Anwesenheitssensor als Tür-Sensor zum Erfassen des Fahrers beim Ein- und/oder Aussteigen in/aus dem Steuerstand und/oder einer Kabinentür ausgebildet und/oder der Bediener-Anwesenheitssensor als Bewegungssensor zum Erfassen einer Bewegung des Fahrers im Steuerstand und/oder in der Fahrerkabine ausgebildet und/oder der Bediener-Anwesenheitssensor als Infrarot-Sensor und/oder als Lichtschranke und/oder als Drucksensor und/oder als Sitz-/ Kontaktschalter ausgebildet. So kann zwischen dem Fahrermodus und dem Autonomiemodus in vorteilhafter Weise gewechselt werden, insb. mittels der elektrischen und/oder elektronischen Kontrolleinheit, wenn der Fahrer/Bediener auf/in den Fahrer-bzw. Steuerstand und/oder in die Fahrerkabine ein- oder aussteigt. Beim Einsteigen bzw. Durchtreten durch den Eingang bzw. die Kabinentür sperrt bzw. deaktiviert die elektrische und/oder elektronische Kontrolleinheit in vorteilhafter Weise den Autonomiemodus. Entsprechend sperrt bzw. deaktiviert die elektrische und/oder elektronische Kontrolleinheit in vorteilhafter Weise den Fahrermodus beim Aussteigen bzw. (erneuten) Durchtreten durch den Eingang bzw. die Kabinentür.

Beispielsweise weist der Steuerstand und/oder die Fahrerkabine wenigstens einen Kabinentür- und/oder einen Fenster-Sensor zum Erfassen eines Verschlusszustandes der Kabinentür und/oder wenigstens eines Kabinenfensters auf. Hiermit kann der Zustand der Tür und/oder des Fensters erfasst und z.B. bei geöffneter Tür und/oder Fenster kann mit Hilfe der elektrischen und/oder elektronischen Kontrolleinheit in vorteilhafter Weise der Autonomiemodus gesperrt bzw. deaktiviert werden.

Vorteilhafterweise weist der Steuerstand und/oder die Fahrerkabine wenigstens eine Kabinentür- und/oder Fenster-Schließvorrichtung zum Schließen der Kabinentür und/oder des Kabinenfensters auf. Hierdurch kann vor und/oder für den Autonomiemodus ein Schließen der Kabinentür und/oder des Kabinenfensters vorgesehen werden. Dies verbessert die Betriebssicherheit bzw. die Lebensdauer der Baumaschine.

In einer besonderen Weiterbildung der Erfindung ist wenigstens ein Aktivierungselement zum manuellen Starten/Aktivieren der Autonomiesteuereinheit und/oder des Autonomiemodus der Baumaschine vorgesehen. Zur Aktivierung des autonomen Betriebs bzw. des Autonomiemodus soll/kann der Bediener bzw. Fahrer möglichst erst auf der Baumaschine sitzen und eine Aktion bzw. die Aktivierung ausführen, z.B. einen Knopf als das Aktivierungselement drücken und/oder der Sitzkontaktschalter schaltet bzw. wird durch das Hinsitzen und das Aufstehen betätigt. Die Baumaschine erkennt dementsprechend durch die Aktivierung, dass der Bediener/Fahrer auf der Baumaschine ist, z.B. mittels Sitzkontaktschalter als Aktivierungselement, und überwacht in vorteilhafter Weise, ob sich der Bediener/Fahrer entfernt, z.B. bei inaktivem Sitzkontaktschalter und/oder beim Durchtreten durch den Sensorbereich des Türsensors und/oder nach dem Drücken des Knopfs und/oder mittels Sensoren zur Überwachung des Umfelds. Erst wenn sich der Bediener entfernt hat, wird in vorteilhafter Weise der autonome Betrieb bzw. Autonomiemodus aktiviert.

Für die letztgenannte Variante und/oder für den Autonomiemodus ist in vorteilhafter Weise wenigstens eine Abstands- und/oder Umgebungserfassungseinheit zum Erfassen der Umgebung und/oder eines Mindestabstandes zu der Baumaschine vorgesehen. Hiermit kann der Autonomiemodus bzw. das autonome Fahren/Arbeiten in vorteilhafter Weise umgesetzt werden.

In einer besonderen Weiterbildung der Erfindung ist die Abstands-/ Umgebungserfassungseinheit als Menschen-/Fahrer-/Bediener-Erfassungseinheit zum Erfassen der Anwesenheit und/oder Nicht-Anwesenheit eines Menschen oder des Bedieners/Fahrers in der Umgebung und/oder innerhalb des Mindestabstandes zu der Baumaschine vorgesehen. Dies verbessert zusätzlich die Betriebssicherheit, gerade des Autonomiemodus. So kann der Autonomiemodus erst dann "freigeschaltet" bzw. aktiviert werden, wenn der Fahrer/Bediener sich nach dem Arbeiten bzw. Aktivieren von der Baumaschine einen vorgegebenen Mindestabstand entfernt hat. Beispielsweise ist die elektrische und/oder elektronische Kontrolleinheit derart ausgebildet ist, dass in einem dritten Fall bei Anwesenheit eines Menschen oder des Bedieners/Fahrers in der Umgebung und/oder innerhalb des Mindestabstandes zu der Baumaschine zumindest die Autonomiesteuereinheit deaktiviert ist, so dass die Baumaschine in dem Fahrermodus und/oder nicht im Autonomiemodus betreibbar ist, und dass in einem vierten Fall bei Nicht-Anwesenheit eines Menschen oder des Bedieners/Fahrers in der Umgebung und/oder innerhalb des Mindestabstandes zu der Baumaschine die Autonomiesteuereinheit aktivierbar ist, so dass die Baumaschine in dem Autonomiemodus und/oder nicht im Fahrermodus betreibbar ist.

Vorteilhafterwiese erfolgt eine Freigabe des Autonomiemodus der Baumaschine nur bei Nicht-Anwesenheit eines Menschen oder des Bedieners/Fahrers in der Fahrerkabine und insbesondere bei Nicht-Anwesenheit eines Menschen oder des Bedieners/Fahrers in der Umgebung und/oder innerhalb eines Mindestabstandes zu der Baumaschine.

Beispielsweise ist ein möglicher Ablauf zum Umschalten zwischen manuellem Fahrermodus/-betrieb und autonomem Modus/Betrieb:
1. Bedieneranwesenheitskontrolle erkennt, dass Bediener an/auf der Baumaschine ist, z.B. Sitzkontaktschalter, aktiviertes Zündschloss etc..
2. Bedienerwunsch/Aktivierung der autonomen Funktion bzw. des Autonomiemodus, z.B. durch Drücken des Aktivierungselementes bzw. eines Kopfes/Tasters oder Aktivierung eines Menüs beispielsweise mittels eines Displays bzw. Touchscreens etc..
3. Anwesenheitskontrolle/-sensor erkennt, dass Bediener nicht mehr auf der Maschine ist.
4. Optional erfasst/erkennt die Umfeldüberwachung, dass sich der Bediener/Fahrer vom Fahrzeug entfernt.
5. Freigabe/Start des Autonomiemodus bzw. der autonomen Funktion durch die Kontrolleinheit bzw. das Steuerungssystem.
6. Durchführung/Betreib im Autonomiemodus bzw. autonomes Arbeiten.

Grundsätzlich können nachfolgende Merkmale bzw. Eigenschaften einzeln oder in Kombination miteinander von großem Vorteil sein:
- Sitzkontaktschalter soll/muss deaktiviert sein, damit autonomer Betrieb aktiviert werden kann,
- bei aktiviertem autonomen Betrieb bzw. im Autonomiemodus werden die Komfortfunktionen für einen Benutzer deaktiviert wie z.B. Heizung, Klimaanlage, Radio, Sitzheizung, Innenraumbeleuchtung, Anzeigen, etc.,
- Fenster und Türen sollen geschlossen sein bzw. automatisch geschlossen werden, wenn der autonome Betrieb bzw. Autonomiemodus gestartet wird,
- Fahrer-/Steuerstand soll/wird im autonomen Betrieb deaktiviert sein.

Generell kann die Baumaschine eine/ein beliebige/s Lenkung bzw. Lenksystem aufweisen, wie z.B. Knick-Lenkung, Panzerlenkung, Vorderrad-/ Hinterrad-Lenkung, Vierradlenkung, insb. Hundeganglenkung, oder dergleichen. Baumaschinen mit Knicklenkung weisen einen vorderen Teil bzw. dem sog. Vorderwagen und einen hinteren Teil bzw. dem sog. Hinterwagen auf, die miteinander über/mittels der Knicklenkung verbunden sind. Beispielsweise ist einer der Sensoren am hinteren Teil bzw. dem sog. Hinterwagen angeordnet, auf dem z.B. zudem auch der Steuer-/Fahrerstand und/oder die Fahrerkabine in vorteilhafter Weise angeordnet bzw. vorgesehen ist.

In einer besonderen Weiterbildung der Erfindung ist der Fahrweg-Sensor als Front-Sensor für eine Vorwärtsfahrt an einem Frontbereich der Baumaschine und/oder mit einem Erfassungsbereich ausgebildet, wobei der Erfassungsbereich in Richtung einer Vorwärtsfahrt bzw. des Arbeitswerkzeuges ausgerichtet ist, und/oder der an einem Front-Bereich der Baumaschine, insb. am sog. Vorderwagen, angeordnet ist. Alternativ oder in Kombination hierzu ist der Fahrweg-Sensor als Heck-Sensor für eine Rückwärtsfahrt an einem Heckbereich der Baumaschine und/oder mit einem Erfassungsbereich ausgebildet, wobei der Erfassungsbereich in Richtung einer Rückwärtsfahrt bzw. in entgegengesetzte Richtung bzgl. der Anordnung des Arbeitswerkzeuges ausgerichtet ist, und/oder der an einem HeckBereich der Baumaschine, insb. am sog. Hinterwagen, angeordnet ist.

Vorteilhafterweise ist der Fahrweg-Sensor als Front-Sensor für eine Vorwärtsfahrt an/auf einem hinteren Bereich der Baumaschine bzw. dem sog. Hinterwagen angeordnet und mit einem Erfassungsbereich ausgebildet, wobei der Erfassungsbereich in Richtung einer Vorwärtsfahrt bzw. des Arbeitswerkzeuges ausgerichtet ist. Dies hat sich gerade bei Baumaschinen mit Knicklenkung als besonders positiv erwiesen.

Von Vorteil sind ein oder mehrere Sensoren an der Baumaschine, insbesondere an der Kabine, vorgesehen, der/die nach vorne blicken, zumindest auf dem sog. Hinterwagen bzw. für die sog. Umfelderkennung.

Grundsätzlich können Sensoren verwendet werden, wobei der/die Sensoren z.B. als LIDAR-, RADAR-, Ultraschall-, Infrarot- und/oder Laser-Sensoren und/oder als optischer Sensor wie z.B. als Kamera etc. ausgebildet werden.

### Ausführungsbeispiel

Ein Ausführungsbeispiel der Erfindung ist in der Zeichnung dargestellt und wird anhand der einzigen Figur nachfolgend näher erläutert.

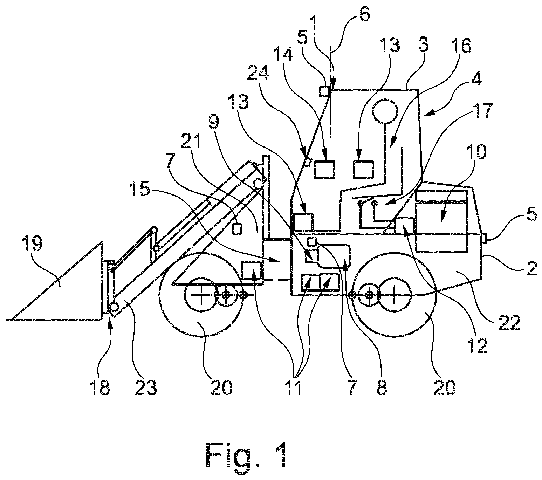

Figur 1 zeigt eine schematische Seitenansicht einer mobilen Baumaschine, insbesondere eines Radladers, gemäß der Erfindung.

In Figur 1 ist eine mobile Baumaschine 1 bzw. ein Radlader 1 in Seitenansicht dargestellt und umfasst einen Fahrzeugrahmen 2, mindestens einen elektrischen Akku bzw. Energiespeicher 10 zum Speichern elektrischer Energie, wobei der/die Energiespeicher 10 v.a. für die Versorgung des Fahrantriebs und die Arbeitsfunktionen dienen. Alternativ kann der Radlader 1 in allgemein bekannter Weise auch einen Verbrennungsmotor, insb. einen Dieselmotor, für den Antrieb aufweisen.

Ein Steuerstand 4 bzw. ein Kabinendach 3 einer Kabine 4 umfasst einen ersten Fahrwegsensor 5, der ggf. um eine vertikale Drehachse 6 mit Hilfe eines Aktuators, insb. eines Linearantriebes mit Verstellmechanismus, verstellbar bzw. verschwenkbar ist. Der Fahrwegsensor 5 umfasst ein Sensorelement und einen Sensorbereich bzw. eine sog. Sensorkeule, so dass eine Fahrweg- bzw. Umfeldüberwachung für einen autonomen Betrieb des Radladers 1 möglich ist.

Darüber hinaus können auch noch weitere Sensoren 5, 7 vorgesehen werden, z.B. ein zweiter Fahrwegsensor 5, dessen Sensorbereich bzw. Sensorkeule entgegen der Vorwärtsfahrrichtung nach hinten weist und am Heck bzw. am Hinterwagen 22 des Radladers angeordnet ist. Seitlich angeordnete Sensoren 7 mit seitlich ausgerichteten Sensorbereiche bzw. Sensorkeulen können am Vorderwagen 21 und/oder Hinterwagen 22 zusätzlich zur Abstands- bzw. Umfeldüberwachung vorgesehen werden.

Die Sensoren 5, 7 erfassen in vorteilahfter Weise das Umfeld und/oder den Abstand von ggf. vorhandenen Objekten wie Menschen, Tieren, Gegenstände etc.. Die möglichst vollumfängliche Erfassung bzw. ringsum ausgebildeten Sensorbereiche bzw. Sensorkeulen können auch bei eingeschlagener bzw. ausgelenkter Lenkung, insb. einer Knicklenkung 15, den Fahrweg und/oder bewegliche Objekte erfassen, die ggf. zu einer Beeinträchtigung und/oder Änderung des Fahrens führen könnten. In derartigen Fällen wird u.a. mittels einer Kontrolleinheit 12 ein Ausweichen bzw. Umfahren, Verlangsamen und/oder Stoppen des Radladers 1 realisiert.

Wie allg. üblicher wird die Steuerung über mindestens ein Stellglied 13, 14 wie z.B. ein Fuß- oder Handsteller 13 bzw. ein Joy-Stick 14 und Fußpedal 13 realisiert. Eine Ansteuerung des E-Motors 8 bzw. Arbeitsmotors 8 erfolgt über eine Kontrolleinheit 12 und Umrichter 11. Zudem werden elektrische und/oder hydraulische Leitungen (nicht näher dargestellt) in vorteilhafter Weise über die Knicklenkung 15 bzw. ein zentrales Knickgelenk 15 geführt, um z.B. einen Hubarm 23 bzw. ein Werkzeug 19 zu verstellen.

Zur Erfassung eines Fahrers 16 des Radladers 1 ist beispielsweise ein Sitzkontaktschalter 17 vorgesehen, der die Anwesenheit bzw. das Sitzen des Fahrers 16 auf einem Fahrersitz erfassen bzw. detektieren kann.

Optional ist ein weiterer Steuerstand-Sensor 24, insb. eine Lichtschranke oder dergleichen, vorgesehen, die ein Ein- und ein Aussteigen des Fahrers 16 in/aus dem Steuerstand 4 bzw. der Kabine 4 erfassen kann.

Dementsprechend können wiederkehrende Arbeiten durch die Baumaschine 1 bzw. den Radlader 1 autonom abgearbeitet werden. So ist es möglich, dass der Radlader 1 für Arbeiten genutzt werden kann, ohne dass die Steuerung durch den Fahrer 16 bzw. Bediener erfolgt. Es ist jedoch auch möglich, den Radlader 1 herkömmlich durch den Fahrer 16 zu steuern. Hierzu ist der "übliche" Steuerstand 4 auf/am Radlader 1 weiterhin vorgesehen.

In Bezug auf einen autonomen Betrieb bzw. einen Autonomiemodus sind beispielsweise folgende vorteilhafte Merkmale vorzusehen:
- Sitzkontaktschalter 17 muss deaktiviert sein, d.h. kein Fahrer 16 sitzt auf dem Sitz bzw. "will fahren", damit der autonome Betrieb aktiviert werden kann,
- bei aktiviertem autonomen Betrieb werden u.a. auch die Komfortfunktionen für einen Benutzer deaktiviert, z.B. Heizung, Klimaanlage, Radio, Sitzheizung, Innenraumbeleuchtung, Anzeigen etc.,
- ggf. vorhandene Fenster und Türen der Kabine 4 sollten (automatisch) geschlossen werden, wenn der autonome Betrieb gestartet wird,
- der Fahrerstand 4 bzw. die Steuerelemente 13, 14 sollen für den autonomen Betrieb deaktiviert werden.

Zur Aktivierung des autonomen Betriebs kann zum Beispiel der Bediener bzw. Fahrer 16 ggf. erst auf dem Sitz bzw. Radlader 1 sitzen und eine Aktion ausführen, z.B. einen Knopf, Taster etc. drücken bzw. betätigen. Die Maschine 1 "erkennt" somit, dass der Bediener/Fahrer 16 auf der Maschine bzw. dem Radlader 1 ist, z.B. mittels Sitzkontaktschalter 17 und/oder Lichtschranke 24, und überwacht nach der Aktivierung bzw. dem Drücken des Knopfs, ob sich der Bediener/Fahrer 16 vom Fahrerstand 4 entfernt, z.B. bei inaktivem Sitzkontaktschalter 17 und ggf. mittels der Sensoren 5, 7 zur Überwachung des Umfelds. Erst wenn sich der Bediener bzw. Fahrer 16 entfernt hat, wird der autonome Betrieb mittels der Kontrolleinheit 12 aktiviert.

So kann beispielsweise ein möglicher Ablauf zum Umschalten zwischen manuellem und autonomem Betrieb umgesetzt werden:
1. Bedieneranwesenheitskontrolle erkennt, dass Bediener/Fahrer 16 an/auf der Baumaschine 1 bzw. dem Radlader 1 ist, z.B. Sitzkontaktschalter 17 und/oder Sensor 24 und/oder aktiviertes Zündschloss etc.,
2. Bedienerwunsch bzw. Aktivierung der autonomen Funktion bzw. des Autonomiemodus, z.B. durch Betätigen/Drücken eines Kopfes, Tasters oder Aktivierung eines Menüs, z.B. mittels Touchscreen des Steuerstandes 4 und/oder eines ggf. tragbaren/mobilen Telekommunikationsgerätes wie eines Computers, Desktops, Laptops, Tablet, Smartphones, Smartwatch oder dergleichen,
3. Anwesenheitskontrolle wie z.B. Sitzkontaktschalter 17 und/oder Sensor 24 erkennt, dass Bediener/Fahrer 16 nicht (mehr) auf der Maschine 1 bzw. dem Steuerstand 4 ist,
4. ggf. Umfeldüberwachung erkennt, dass sich der Bediener/Fahrer 16 vom Fahrzeug entfernt (hat),
5. Freigabe der autonomen Funktion durch das Steuerungssystem,
6. Durchführung/Betreib im Autonomiemodus bzw. autonomes Arbeiten.

## Patentansprüche

1. Mobile Baumaschine (1), insbesondere Radlader (1), Teleskoplader, Bagger, Dumper, Bodenverdichtungsvorrichtung wie ein Vibrationsstampfer, eine Vibrationsplatte oder eine Walze, oder dergleichen, mit einem Tragrahmen (2) und mit einer Antriebseinheit (8) zum Antreiben wenigstens eines Antriebselementes (20), z.B. Antriebsrad/-walze und/oder Kettenfahrwerk oder Vibrationselement, und/oder eines Arbeitswerkzeuges (19), z.B. Greif-/Schaufel, Gabel, Vibrationselement, Fräse, Räumschild, Mulde oder dergleichen, wobei die Antriebseinheit (8) wenigstens einen Antriebsmotor (8), insb. einen Verbrennungsmotor und/oder einen Elektromotor (8) und/oder einen Hydraulikmotor, und eine Lenkvorrichtung (15) zum Lenken der Baumaschine und eine Werkzeugaufnahme (18) zum Aufnehmen und/oder Halten/Fixieren des Arbeitswerkzeuges (8) und/oder eine Hubeinrichtung (23), insb. Hubarm, Greifarm, Teleskoparm, Muldenkippeinheit oder dergleichen, aufweist, wobei wenigstens eine elektrische und/oder elektronische Kontrolleinheit (12) zum Kontrollieren der Antriebseinheit (8) und/oder des Antriebsmotors (8) und/oder der Lenkvorrichtung (20) und/oder der Hubeinrichtung (23) und/oder des Arbeitswerkzeuges (8) und/oder der Werkzeugaufnahme (18) vorgesehen ist, wobei eine zumindest einen Fahrersitz und wenigstens ein Lenkelement/Lenkrad der Lenkvorrichtung aufweisender Steuerstand (4), insb. einer Fahrerkabine (4), für einen Fahrer (16) vorgesehen ist, wobei wenigstens ein Bedienelement (13, 14), insb. Fußpedal, sog. Joystick, Tastatur, Touchscreen und/oder Touchpad oder dergleichen, zum manuellen Bedienen/Betätigen von einer Bedienperson (16) in einem Fahrermodus vorgesehen ist, wobei die elektrische und/oder elektronische Kontrolleinheit (12) wenigstens eine Autonomiesteuereinheit zum autonomen Fahren und/oder Steuern der Baumaschine in einem Autonomiemodus aufweist, wobei ein Bediener-Anwesenheitssensor (17, 24) zum Erfassen der Anwesenheit und/oder Nicht-Anwesenheit eines Menschen (16) oder des Bedieners/Fahrers (16) auf dem Steuerstand (4) und/oder in der Fahrerkabine (4) vorgesehen ist, **dadurch gekennzeichnet, dass** wenigstens eine externe Steuervorrichtung, wie ein Computer, Telekommunikationsgerät, Smartphone, Tablet, Smartwatch oder dergleichen, zum Festlegen wenigstens eines Zeitpunktes/Zeitraumes für den Autonomiemodus ausgebildet ist und dass wenigstens eine Kommunikationseinheit zum Übermitteln und/oder drahtlosen Senden/Empfangen von Daten/Informationen zwischen der Steuervorrichtung und der Kontrolleinheit (12) vorgesehen ist, so dass die Kontrolleinheit (12) zumindest zu dem Zeitpunkt/Zeitraum den Autonomiemodus aktiviert.

2. Baumaschine nach Anspruch 1, **dadurch gekennzeichnet, dass** die elektrische und/oder elektronische Kontrolleinheit (12) derart ausgebildet ist, dass in einem ersten Fall bei Anwesenheit eines Menschen (16) oder des Bedieners/Fahrers auf dem Steuerstand (4) und/oder in der Fahrerkabine zumindest die Autonomiesteuereinheit deaktiviert ist, so dass die Baumaschine in dem Fahrermodus und/oder nicht im Autonomiemodus betreibbar ist, und dass in einem zweiten Fall bei Nicht-Anwesenheit eines Menschen (16) oder des Bedieners/Fahrers auf dem Steuerstand (4) und/oder in der Fahrerkabine die Autonomiesteuereinheit aktivierbar ist, so dass die Baumaschine in dem Autonomiemodus und/oder nicht im Fahrermodus betreibbar ist.

3. Baumaschine nach einem der vorgenannten Ansprüche, **dadurch gekennzeichnet, dass** die elektrische und/oder elektronische Kontrolleinheit (12) derart ausgebildet ist, dass im Autonomiemodus wenigstens das Lenkelement/Lenkrad der Lenkvorrichtung (15) und das Bedienelement (13, 14) deaktiviert ist/sind.

4. Baumaschine nach einem der vorgenannten Ansprüche, **dadurch gekennzeichnet, dass** die elektrische und/oder elektronische Kontrolleinheit (12) derart ausgebildet ist, dass im Autonomiemodus wenigstens ein oder mehrere Nebenaggregate und/oder Komfortgeräte wie Radio, Heizung, Klimaanlage, Armaturen-/Kabinenbeleuchtung oder dergleichen deaktiviert ist/sind.

5. Baumaschine nach einem der vorgenannten Ansprüche, **dadurch gekennzeichnet, dass** der Bediener-Anwesenheitssensor (17, 24) als Sitzkontakt-Sensor (17) zum Erfassen des Fahrers (16) auf dem Fahrersitz und/oder als Aktivierungs-/Zündschloss-/ Starter-Sensor zum manuellen Starten/Aktivieren eines Starterelementes der Baumaschine ausgebildet ist.

6. Baumaschine nach einem der vorgenannten Ansprüche, **dadurch gekennzeichnet, dass** der Bediener-Anwesenheitssensor (17, 24) als Tür-Sensor (24) zum Erfassen des Fahrers beim Ein- und/oder Aussteigen in/aus dem Steuerstand (4) und/oder einer Kabinentür ausgebildet ist und/oder dass der Bediener-Anwesenheitssensor (17, 24) als Bewegungssensor (24) zum Erfassen einer Bewegung des Fahrers im Steuerstand (16) und/oder in der Fahrerkabine ausgebildet ist und/oder dass der Bediener-Anwesenheitssensor (17, 24) als Infrarot-Sensor und/oder als Lichtschranke (24) und/oder als Drucksensor und/oder als Sitz-/ Kontaktschalter (17) ausgebildet ist.

7. Baumaschine nach einem der vorgenannten Ansprüche, **dadurch gekennzeichnet, dass** der Steuerstand (4) und/oder die Fahrerkabine wenigstens einen Kabinentür- und/oder einen Fenster-Sensor zum Erfassen eines Verschlusszustandes der Kabinentür und/oder wenigstens eines Kabinenfensters aufweist.

8. Baumaschine nach einem der vorgenannten Ansprüche, **dadurch gekennzeichnet, dass** der Steuerstand (4) und/oder die Fahrerkabine wenigstens eine Kabinentür- und/oder Fenster-Schließvorrichtung zum Schließen der Kabinentür und/oder des Kabinenfensters aufweist.

9. Baumaschine nach einem der vorgenannten Ansprüche, **dadurch gekennzeichnet, dass** wenigstens ein Aktivierungselement (17) zum manuellen Starten/Aktivieren der Autonomiesteuereinheit und/oder des Autonomiemodus der Baumaschine vorgesehen ist.

10. Baumaschine nach einem der vorgenannten Ansprüche, **dadurch gekennzeichnet, dass** wenigstens eine Abstands- und/oder Umgebungserfassungseinheit (5, 7) zum Erfassen der Umgebung und/oder eines Mindestabstandes zu der Baumaschine vorgesehen ist.

11. Baumaschine nach einem der vorgenannten Ansprüche, **dadurch gekennzeichnet, dass** die Abstands-/ Umgebungserfassungseinheit (5, 7) als Menschen-/Fahrer-/ Bediener-Erfassungseinheit (5, 7) zum Erfassen der Anwesenheit und/oder Nicht-Anwesenheit eines Menschen (16) oder des Bedieners/Fahrers in der Umgebung und/oder innerhalb des Mindestabstandes zu der Baumaschine vorgesehen ist.

12. Baumaschine nach einem der vorgenannten Ansprüche, **dadurch gekennzeichnet, dass** die elektrische und/oder elektronische Kontrolleinheit (12) derart ausgebildet ist, dass in einem dritten Fall bei Anwesenheit eines Menschen (16) oder des Bedieners/Fahrers in der Umgebung und/oder innerhalb des Mindestabstandes zu der Baumaschine zumindest die Autonomiesteuereinheit deaktiviert ist, so dass die Baumaschine in dem Fahrermodus und/oder nicht im Autonomiemodus betreibbar ist, und dass in einem vierten Fall bei Nicht-Anwesenheit eines Menschen (16) oder des Bedieners/Fahrers in der Umgebung und/oder innerhalb des Mindestabstandes zu der Baumaschine die Autonomiesteuereinheit aktivierbar ist, so dass die Baumaschine in dem Autonomiemodus und/oder nicht im Fahrermodus betreibbar ist.

13. Baumaschine nach einem der vorgenannten Ansprüche, **dadurch gekennzeichnet, dass** die externe Steuervorrichtung derart ausgebildet ist, dass wenigstens ein Tages- und/oder Wochenplan mit einem oder mehreren Zeitpunkte/Zeiträume für den Autonomiemodus der Baumaschine vorgesehen/festlegbar ist.

14. Verfahren zum Betreiben einer mobilen Baumaschine, **dadurch gekennzeichnet, dass** eine Baumaschine nach einem der vorgenannten Ansprüche verwendet wird.

15. Verfahren zum Betreiben einer Baumaschine nach einem der vorgenannten Ansprüche, **dadurch gekennzeichnet, dass** eine Freigabe des Autonomiemodus der Baumaschine nur bei Nicht-Anwesenheit eines Menschen (16) oder des Bedieners/Fahrers in/auf dem Steuerstand (4) und/oder der Fahrerkabine und insbesondere bei Nicht-Anwesenheit eines Menschen (16) oder des Bedieners/Fahrers in der Umgebung und/oder innerhalb eines Mindestabstandes zu der Baumaschine erfolgt.

## Claims

1. Mobile construction machine (1), in particular wheel loader (1), telehandler, excavator, dumper, ground compaction device such as a vibratory rammer, a vibratory plate or a roller, or the like, with a support frame (2) and with a drive unit (8) for driving at least one drive element (20), e.g. drive wheel/roller and/or crawler track unit or vibratory element, and/or a working tool (19), e.g. gripper/shovel, fork, vibratory element, rotary hoe, bulldozer blade, trough or the like, wherein the drive unit (8) has at least one drive motor (8), in particular an internal combustion engine and/or an electric motor (8) and/or a hydraulic motor, and a steering device (15) for steering the construction machine and a tool holder (18) for receiving and/or holding/fixing the working tool (8) and/or a lifting device (23), in particular a lifting arm, gripper arm, telescopic arm, tipping unit or the like, wherein at least one electrical and/or electronic control unit (12) is provided for controlling the drive unit (8) and/or the drive motor (8) and/or the steering device (20) and/or the lifting device (23) and/or the working tool (8) and/or the tool holder (18), wherein a control stand (4) comprising at least one driver's seat and at least one steering element/steering wheel of the steering device, in particular a driver's cab (4), is provided for a driver (16), wherein at least one operating element (13, 14), in particular a foot pedal, so-called joystick, keyboard, touchscreen and/or touchpad or the like, is provided for manual operation/actuation by an operator (16) in a driver mode, wherein the electric and/or electronic control unit (12) has at least one autonomy control unit for autonomous driving and/or controlling the construction machine in an autonomy mode, wherein an operator presence sensor (17, 24) for detecting the presence and/or absence of a person (16) or the operator/driver (16) on the control stand (4) and/or in the driver's cab (4) is provided, **characterized in that** at least one external control device, such as a computer, telecommunications device, smartphone, tablet, smartwatch or the like is designed for defining at least one time/period for the autonomy mode, and **in that** at least one communication unit for the transfer and/or wireless transmission/reception of data/information between the control device and the control unit (12) is provided, such that the control unit (12) activates the autonomy mode at least at the time/period.

2. Construction machine according to Claim 1, **characterized in that** the electrical and/or electronic control unit (12) is designed in such a way that in a first case, in the presence of a person (16) or the operator/driver on the control stand (4) and/or in the driver's cab, at least the autonomous control unit is deactivated, such that the construction machine can be operated in the driver mode and/or not in the autonomy mode, and that in a second case, in the absence of a person (16) or the operator/driver on the control stand (4) and/or in the driver's cab, the autonomy control unit can be activated, such that the construction machine can be operated in the autonomy mode and/or not in the driver mode.

3. Construction machine according to either of the preceding claims, **characterized in that** the electric and/or electronic control unit (12) is designed in such a way that at least the steering element/steering wheel of the steering device (15) and the operating element (13, 14) is/are deactivated in the autonomy mode.

4. Construction machine according to one of the preceding claims, **characterized in that** the electrical and/or electronic control unit (12) is designed in such a way that at least one or more auxiliary units and/or comfort devices such as a radio, heating, air conditioning, dashboard/cabin lighting or the like is/are deactivated in the autonomy mode.

5. Construction machine according to one of the preceding claims, **characterized in that** the operator presence sensor (17, 24) is designed as a seat contact sensor (17) for detecting the driver (16) on the driver's seat and/or as an activation/ignition lock/starter sensor for manually starting/activating a starter element of the construction machine.

6. Construction machine according to one of the preceding claims, **characterized in that** the operator presence sensor (17, 24) is designed as a door sensor (24) for detecting the driver when entering and/or exiting the control stand (4) and/or a cab door, and/or in that the operator presence sensor (17, 24) is designed as a motion sensor (24) for detecting a movement of the operator on the control stand (16) and/or in the driver's cab, and/or **in that** the operator presence sensor (17, 24) is designed as an infrared sensor and/or as a light barrier (24) and/or as a pressure sensor and/or as a seat/contact switch (17).

7. Construction machine according to one of the preceding claims, **characterized in that** the control stand (4) and/or the driver's cab have/has at least one cab door sensor and/or window sensor for detecting a locking state of the cab door and/or at least one cab window.

8. Construction machine according to one of the preceding claims, **characterized in that** the control stand (4) and/or the driver's cab have/has at least one cab door closing device and/or window closing device for closing the cab door and/or the cab window.

9. Construction machine according to one of the preceding claims, **characterized in that** at least one activation element (17) is provided for manually starting/activating the autonomy control unit and/or the autonomy mode of the construction machine.

10. Construction machine according to one of the preceding claims, **characterized in that** at least one distance and/or environment detection unit (5, 7) for detecting the environment and/or a minimum distance from the construction machine is provided.

11. Construction machine according to one of the preceding claims, **characterized in that** the distance/environment detection unit (5, 7) is provided as a person/driver/operator detection unit (5, 7) for detecting the presence and/or absence of a person (16) or the operator/driver in the environment and/or within the minimum distance from the construction machine.

12. Construction machine according to one of the preceding claims, **characterized in that** the electrical and/or electronic control unit (12) is designed in such a way that in a third case, in the presence of a person (16) or the operator/driver in the environment and/or within the minimum distance from the construction machine, at least the autonomy control unit is deactivated, such that the construction machine can be operated in the driver mode and/or not in the autonomy mode, and **in that** in a fourth case, in the absence of a person (16) or the operator/driver in the environment and/or within the minimum distance from the construction machine, the autonomy control unit can be activated, such that the construction machine can be operated in the autonomy mode and/or not in the driver mode.

13. Construction machine according to one of the preceding claims, **characterized in that** the external control device is designed in such a way that at least one day and/or week schedule with one or more times/periods for the autonomy mode of the construction machine is provided/definable.

14. Method for operating a mobile construction machine, **characterized in that** a construction machine according to one of the preceding claims is used.

15. Method for operating a construction machine according to one of the preceding claims, **characterized in that** the autonomy mode of the construction machine is released only when a person (16) or the operator/driver is absent in/on the control stand (4) and/or the driver's cab and, in particular, when a person (16) or the operator/driver is absent in the environment and/or within a minimum distance from the construction machine.

## Revendications

1. Engin de construction (1) mobile, en particulier chargeuse sur pneus (1), chargeuse télescopique, excavateur, tombereau, dispositif de compactage du sol tel qu'un pilon vibrant, une plaque vibrante ou un rouleau, ou similaire, avec un cadre de support (2) et avec une unité d'entraînement (8) pour entraîner au moins un élément d'entraînement (20), par exemple roue/rouleau d'entraînement et/ou train de roulement chenillé ou élément de vibration, et/ou un outil de travail (19), par exemple grappin/godet, fourche, élément de vibration, fraiseuse, lame de déblaiement, benne ou similaire, l'unité d'entraînement (8) comportant au moins un moteur d'entraînement (8), en particulier un moteur à combustion interne et/ou un moteur électrique (8) et/ou un moteur hydraulique, et un dispositif de direction (15) pour diriger l'engin de construction et un logement d'outil (18) destiné à recevoir et/ou maintenir/fixer l'outil de travail (8) et/ou un système de levage (23), en particulier un bras de levage, un bras de préhension, un bras télescopique, une unité de basculement de benne ou similaire, au moins une unité de contrôle électrique et/ou électronique (12) étant prévue pour contrôler l'unité d'entraînement (8) et/ou le moteur d'entraînement (8) et/ou le dispositif de direction (20) et/ou le système de levage (23) et/ou l'outil de travail (8) et/ou le logement d'outil (18), un poste de commande (4) comportant au moins un siège de conducteur et au moins un élément de direction/volant du dispositif de direction, en particulier d'une cabine (4) de conducteur étant prévu pour un conducteur (16), au moins un élément de commande (13, 14), en particulier une pédale, appelée joystick, un clavier, un écran tactile et/ou un pavé tactile ou similaire , étant prévu pour commander/actionner manuellement un opérateur (16) dans un mode de conducteur, l'unité de contrôle électrique et/ou électronique (12) comportant au moins une unité de commande autonome pour la conduite et/ou la commande autonome de l'engin de construction dans un mode autonome, un capteur de présence d'opérateur (17, 24) étant prévu pour détecter la présence et/ou l'absence d'une personne (16) ou de l'opérateur/du conducteur (16) sur le poste de commande (4) et/ou dans la cabine (4) de conducteur, **caractérisé en ce qu'**au moins un dispositif de commande externe, tel qu'un ordinateur, un appareil de télécommunication, un téléphone intelligent, une tablette, une montre intelligente ou similaire, est formé pour définir au moins un moment/une période de temps pour le mode autonome et qu'au moins une unité de communication est prévue pour la transmission et/ou l'envoi/la réception sans fil de données/informations entre le dispositif de commande et l'unité de contrôle (12), de telle sorte que l'unité de contrôle (12) active le mode autonome au moins au moment/à la période de temps.

2. Engin de construction selon la revendication 1, **caractérisé en ce que** l'unité de contrôle électrique et/ou électronique (12) est formée de telle manière que dans un premier cas, au moins l'unité de commande autonome est désactivée en présence d'une personne (16) ou de l'opérateur/du conducteur sur le poste de commande (4) et/ou dans la cabine de conducteur, de telle sorte que l'engin de construction peut fonctionner dans le mode de conducteur et/ou ne peut pas fonctionner dans le mode autonome, et que dans un deuxième cas, en l'absence d'une personne (16) ou de l'opérateur/du conducteur sur le poste de commande (4) et/ou dans la cabine de conducteur, l'unité de commande autonome peut être activée, de telle sorte que l'engin de construction peut fonctionner dans le mode autonome et/ou ne peut pas fonctionner dans le mode de conducteur.

3. Engin de construction selon l'une des revendications précédentes, **caractérisé en ce que** l'unité de contrôle électrique et/ou électronique (12) est formée de telle manière que dans le mode autonome, au moins l'élément de direction/le volant de direction du dispositif de direction (15) et l'élément de commande (13, 14) sont désactivés.

4. Engin de construction selon l'une des revendications précédentes, **caractérisé en ce que** l'unité de contrôle électrique et/ou électronique (12) est formée de telle manière que dans le mode autonome, au moins une ou plusieurs unités auxiliaires et/ou appareils de confort tels que radio, chauffage, climatisation, éclairage d'instruments/de cabine ou similaire, sont désactivés.

5. Engin de construction selon l'une des revendications précédentes, **caractérisé en ce que** le capteur de présence d'opérateur (17, 24) est formé comme un capteur de contact de siège (17) pour détecter le conducteur (16) sur le siège de conducteur et/ou comme un capteur d'activation/de clé de contact/de démarrage pour démarrer/activer manuellement un élément de démarrage de l'engin de construction.

6. Engin de construction selon l'une des revendications précédentes, **caractérisé en ce que** le capteur de présence d'opérateur (17, 24) est formé comme un capteur de porte (24) pour détecter le conducteur lorsqu'il entre dans le poste de commande (4) et/ou par une porte de cabine et/ou lorsqu'il sort du poste de commande et/ou d'une porte de cabine et/ou que le capteur de présence d'opérateur (17, 24) est formé comme un capteur de déplacement (24) pour détecter un déplacement du conducteur dans le poste de commande (16) et/ou dans la cabine de conducteur, et/ou que le capteur de présence de conducteur (17, 24) est formé comme un capteur infrarouge et/ou comme une barrière lumineuse (24) et/ou comme un capteur de pression et/ou comme un commutateur de siège/contact (17).

7. Engin de construction selon l'une des revendications précédentes, **caractérisé en ce que** le poste de commande (4) et/ou la cabine de conducteur comportent au moins un capteur de porte de cabine et/ou un capteur de fenêtre pour détecter un état de fermeture de la porte de cabine et/ou d'au moins une fenêtre de cabine.

8. Engin de construction selon l'une des revendications précédentes, **caractérisé en ce que** le poste de commande (4) et/ou la cabine de conducteur comportent au moins un dispositif de fermeture de porte de cabine et/ou de fenêtre de cabine pour fermer la porte de cabine et/ou la fenêtre de cabine.

9. Engin de construction selon l'une des revendications précédentes, **caractérisé en ce qu'**au moins un élément d'activation (17) est prévu pour le démarrage manuel/l'activation manuelle de l'unité de commande autonome et/ou du mode autonome de l'engin de construction.

10. Engin de construction selon l'une des revendications précédentes, **caractérisé en ce qu'**au moins une unité de détection de distance et/ou d'environnement (5, 7) est prévue pour détecter l'environnement et/ou une distance minimale par rapport à l'engin de construction.

11. Engin de construction selon l'une des revendications précédentes, **caractérisé en ce que** l'unité de détection de distance/environnement (5, 7) est prévue comme une unité de détection de personne/conducteur/opérateur (5, 7) pour détecter la présence et/ou l'absence d'une personne (16) ou de l'opérateur/du conducteur dans l'environnement et/ou à la distance minimale de l'engin de construction.

12. Engin de construction selon l'une des revendications précédentes, **caractérisé en ce que** l'unité de contrôle électrique et/ou électronique (12) est formée de telle manière que, dans un troisième cas, en présence d'une personne (16) ou de l'opérateur/du conducteur dans l'environnement et/ou à une distance minimale de l'engin de construction, au moins l'unité de commande autonome est désactivée, de telle sorte que l'engin de construction peut fonctionner dans le mode de conducteur et/ou ne peut pas fonctionner dans le mode autonome, et que, dans un quatrième cas, en l'absence d'une personne (16) ou de l'opérateur/du conducteur dans l'environnement et/ou à la distance minimale de l'engin de construction, l'unité de commande autonome peut être activée, de telle sorte que l'engin de construction peut fonctionner dans le mode autonome et/ou ne peut pas fonctionner dans le mode de conducteur.

13. Engin de construction selon l'une des revendications précédentes, **caractérisé en ce que** le dispositif de commande externe est formé de telle manière qu'au moins un programme journalier et/ou hebdomadaire avec un ou plusieurs moments/une ou plusieurs périodes de temps est prévu/peut être défini pour le mode autonome de l'engin de construction.

14. Procédé destiné à faire fonctionner un engin de construction mobile, **caractérisé en ce qu'**un engin de construction selon l'une des revendications précédentes est utilisé.

15. Procédé destiné à faire fonctionner un engin de construction selon l'une des revendications précédentes, **caractérisé en ce que** le mode autonome de l'engin de construction n'est validé qu'en l'absence d'une personne (16) ou de l'opérateur/du conducteur dans/sur le poste de commande (4) et/ou dans la cabine de conducteur et en particulier en l'absence d'une personne (16) ou de l'opérateur/du conducteur dans l'environnement et/ou à une distance minimale de l'engin de construction.
